# EUROPÄISCHE PATENTSCHRIFT

(11) **EP 3 286 556 B1**
(45) Veröffentlichungstag und Bekanntmachung des Hinweises auf die Patenterteilung: **16.06.2021**
(21) Anmeldenummer: 16709742.7
(22) Anmeldetag: 08.03.2016
(51) Int. Cl.: G01N 25/18, G01N 25/72

(54) **VORRICHTUNG UND VERFAHREN ZUR PHOTOTHERMISCHEN QUALITÄTSKONTROLLE VON KORNGRÖSSE UND SCHICHTHAFTUNG EINES BAUTEILS**
APPARATUS AND METHOD FOR THE PHOTOTHERMAL QUALITY CONTROL OF PARTICLE SIZE AND LAYER ADHESION OF A COMPONENT
DISPOSITIF ET PROCÉDÉ POUR LE CONTRÔLE QUALITÉ PHOTOTHERMIQUE DE LA GRANULOMÉTRIE ET DE L'ADHÉRENCE DES COUCHES D'UN COMPOSANT

(30) Priorität: 24.04.2015 DE 102015207551
(43) Veröffentlichungstag der Anmeldung: 28.02.2018
(73) Patentinhaber: Robert Bosch GmbH, 70442 Stuttgart (DE)
(72) Erfinder: STRAEHLE, Jochen, 71287 Weissach (DE); BUECHNER, Katrin, 70329 Stuttgart (DE); KROEBER, Volker, 71735 Eberdingen (DE)
(86) Internationale Anmeldenummer: PCT/EP2016/054880
(87) Internationale Veröffentlichungsnummer: WO 2016/169690

(56) Entgegenhaltungen:
- WO-A2-00/11450
- WO-A2-2005/026404
- DE-A1- 2 159 783
- DATONG WU ET AL: "Phase-sensitive modulation thermography and its applications for NDE", OPTICAL SENSING II, Bd. 3056, 4. April 1997 (1997-04-04), XP055274122, 1000 20th St. Bellingham WA 98225-6705 USA ISSN: 0277-786X, DOI: 10.1117/12.271641 ISBN: 978-1-62841-971-9

## Beschreibung

Die vorliegende Erfindung betrifft ein photothermisches Verfahren zur zerstörungsfreien Qualitätskontrolle eines Bauteils im Takt des Fertigungsprozesses sowie eine Vorrichtung zur Durchführung des Verfahrens.

### Stand der Technik

Durch die steigenden Drücke in Dieseleinspritzsystemen werden die überwiegend metallischen Bauteile zunehmend belastet. Dabei spielen die Homogenität und die Feinkörnigkeit des Gefüges eine wichtige Rolle. Grobkörnige Bauteile, die einer großen Druckbelastung ausgesetzt sind, wie beispielsweise das Ventilstück eines Magnetinjektors, können Risse bilden und letztendlich brechen. Die Funktionalität des Injektors ist dann nicht mehr gewährleistet. Hoch belastete Bauteile sind vielfach zusätzlich mit Funktionsschichten vergütet, beispielsweise mit Kohlenstoffbeschichtungen, die den Verschleiß minimieren. Dabei kommt es vereinzelt zu einer schlechten Verbindung zwischen der Kohlenstoffschicht und dem Metall, was zu einem Abplatzen der Schicht und damit zu einer Änderung des Einspritzverhaltens führen kann.

Sowohl die Körnigkeit des Gefüges als auch die Haftung einer Funktionsschicht können bislang nur zerstörend, und daher nur stichprobenartig, kontrolliert werden. Um das Gefüge zu beurteilen, muss ein metallurgischer Schliff angefertigt und anschließend optisch, beispielsweise mit Hilfe eines Lichtmikroskops, bewertet werden. Mikrophotographische Verfahren zur Bestimmung der erkennbaren Ferrit- oder Austenitkorngröße von Stählen sind beispielsweise in der Norm DIN EN ISO 643 festgelegt. Die Haftung einer Funktionsschicht kann nur über Mikroeindrücke und verwandte Untersuchungsmethoden kontrolliert werden, die die Schicht zumindest lokal schädigen. In der VDI-Richtlinie 3198, die das CVD- und PVD-Beschichten zum Aufbringen von Verschleißschutzschichten auf Umformwerkzeuge behandelt, ist der Rockwell-Eindrucktest zur Messung der Haftungsklasse einer Funktionsschicht beschrieben Photothermische Verfahren zur Qualitätskontrolle sind beispielsweise bekannt aus DATONG WU ET AL: "Phase-sensitive modulation thermography and its applications for NDE",OPTICAL SENSING II, Bd. 3056, 4. April 1997 (1997-04-04), XP055274122,1000 20th St. Bellingham WA 98225-6705 USA ISSN: 0277-786X, DOI: 10.1117/12.271641ISBN: 978-1-62841-971-9 oder WO 00/11450 A2.

### Aufgabe und Lösung

Es ist daher die Aufgabe der Erfindung, ein Verfahren zur Qualitätskontrolle eines Bauteils zur Verfügung zu stellen, mit dem sowohl die Körnigkeit des Materials als auch die Haftungseigenschaften einer Funktionsschicht zerstörungsfrei überwacht werden können.

Diese Aufgabe wird erfindungsgemäß gelöst durch ein Verfahren gemäß Hauptanspruch sowie durch eine Vorrichtung zur Durchführung des Verfahrens gemäß Nebenanspruch. Weitere vorteilhafte Ausgestaltungen ergeben sich aus den darauf rückbezogenen Unteransprüchen.

### Offenbarung der Erfindung

Im Rahmen der Erfindung wurde ein Verfahren zur Qualitätskontrolle eines Bauteils entwickelt. Dabei wird das Bauteil durch eine mit mindestens einer Frequenz ω periodisch intensitätsmodulierten Energiequelle erwärmt. Die Amplitude A und/oder die Phase ϕ einer mit der gleichen Frequenz ω modulierten, vom Bauteil abgestrahlten Wärmewelle wird registriert, wobei abhängig von der gewählten Frequenz ω aus der Amplitude A und/oder aus der Phase ϕ die Korngröße d des Materials, aus dem das Bauteil aufgebaut ist, oder die Haftungseigenschaften F einer auf dem Bauteil aufgebrachten Funktionsschicht ausgewertet werden, wobei bei Frequenzen zwischen 25 und 400 Hz die Korngröße d des Materials und bei Frequenzen zwischen 600 und 2000 Hz die Haftungseigenschaften F der Funktionsschicht gemessen werden.

Die Energiequelle kann das Bauteil beispielsweise erwärmen, indem sie ihm unmittelbar Wärme zuführt. Es kann aber auch beispielsweise Licht, insbesondere Laserlicht, auf das Bauteil eingestrahlt und dort durch Absorption in Wärme umgewandelt werden. Dabei hängt die Amplitude der periodischen Temperaturänderung an der Oberfläche des Bauteils von der Frequenz f des eingestrahlten Lichts ab; sie ist typischerweise proportional zu f^{-1/2}. Der Absolutwert der Temperatur an der Oberfläche des Bauteils hängt von der thermischen Diffusionslänge, der eingestrahlten Leistung, der Wärmeleitfähigkeit des Bauteils und der Frequenz f ab. Für typische Werte der Betriebsparameter und Stahl als Werkstoff ergibt sich bei einer Modulationsfrequenz ω von 1000 Hz typischerweise eine Amplitude der Temperaturänderung an der Oberfläche des Bauteils von weniger als 1 °C.

Erfindungsgemäß werden aus der Amplitude A und/oder aus der Phase ϕ die Korngröße d des Materials, aus dem das Bauteil aufgebaut ist, und/oder die Haftungseigenschaften F einer auf dem Bauteil aufgebrachten Funktionsschicht ausgewertet.

Die Korngröße d kann beispielsweise in einer Längeneinheit angegeben werden. Die Haftungseigenschaften F einer auf dem Bauteil aufgebrachten Funktionsschicht können beispielsweise als die Kraft F angegeben werden, die erforderlich ist, um die Funktionsschicht vom Bauteil abzuziehen.

Es wurde erkannt, dass sich sowohl die Korngröße d als auch die Haftungseigenschaften F hinreichend stark auf die Wärmeleitung des Bauteils auswirken, um auf diesem photothermischen Wege sowohl zerstörungsfrei als auch im Takt der Fertigungsserie erfasst werden zu können. Dadurch kann die bisherige stichprobenartige Kontrolle gefertigter Bauteile auf eine 100-%-Kontrolle ausgeweitet werden.

Die in das Bauteil eingekoppelte Wärme dringt in das Material ein und tritt aus ihm später zumindest teilweise wieder aus in Form einer in alle Richtungen abgestrahlten Wärmewelle. Dieser Prozess wird durch den Wärmewiderstand des Materials verzögert. Dementsprechend ist die abgestrahlte Wärmewelle gegenüber der Erwärmung, die beispielsweise durch einen Laserstrahl erfolgen kann, phasenverschoben. Weiterhin kann auch ein Teil der eingekoppelten Wärme verloren gehen; dieser Teil trägt dann zur Amplitude A der Wärmewelle nicht mehr bei.

Vorteilhaft wird ein Bereich mit einer räumlichen Ausdehnung, beispielsweise einem Durchmesser, von maximal 3 µm auf der Bauteiloberfläche lokal erwärmt.

Dann gibt es einen definierten Ausgangspunkt, von dem aus sich die Wärmewelle im Bauteil ausbreitet.

Ob die Messung primär auf die Korngröße d des Materials oder auf die Haftungseigenschaften F einer Funktionsschicht sensitiv ist, hängt von der Eindringtiefe der vom Ort der Erwärmung ausgehenden Wärmewelle in das Bauteil ab. Diese Eindringtiefe ist von der Frequenz der Wärmewelle, welche der Modulationsfrequenz ω der Energiequelle entspricht, abhängig. Frequenzen zwischen 25 und 400 Hz sind besonders zur Messung der Korngröße des Materials geeignet, da die Wärmewelle bei dieser Frequenz weit in das Bauteil hineinreicht. Frequenzen zwischen 600 und 2000 Hz sind besonders zur Messung der Haftungseigenschaften F einer Funktionsschicht geeignet. Die Wärmewelle bleibt dann im Wesentlichen an der Oberfläche des Bauteils.

Daher ist es für die Prüfung der Haftungseigenschaften F einer Funktionsschicht auch gar nicht notwendig, dass das Bauteil in seinem Inneren metallisch oder auch nur wärmeleitend ist. Damit auch die Korngröße des Materials des Bauteils gemessen werden kann, sollte dieses Material mindestens so wärmeleitfähig sein, dass sich in ihm ausgehend vom Ort einer lokalen Erwärmung eine Wärmewelle ausbreiten kann.

Vorteilhaft wird die Temperatur des Bauteils periodisch ausgehend von zwei verschiedenen Basistemperaturen T₁ und T₂ moduliert. Für beide Temperaturen T₁ und T₂ werden dann jeweils Amplituden A(T₁) und A(T₂) und/oder Phasen ϕ(T₁) und ϕ(T₂) registriert. Über die Temperaturabhängigkeit der Amplituden bzw. Phasen kann dann darauf geschlossen werden, ob diese Amplituden bzw. Phasen tatsächlich ein Maß für die gesuchte Korngröße d bzw. für die gesuchten Haftungseigenschaften F sind. Beispielsweise kann ein absoluter oder relativer Unterschied ΔA(T₂-T₁) zwischen den Amplituden A(T₁) und A(T₂) und/oder ein absoluter oder relativer Unterschied Δϕ(T₂-T₁) zwischen den Phasen ϕ(T₁) und ϕ(T₂), der oberhalb oder unterhalb eines vorgegebenen Schwellwerts S1 liegt, als Signal dafür gewertet werden, dass die Amplitude A bzw. die Phase ϕ bei der Frequenz ω von den gesuchten Haftungseigenschaften F bzw. von der gesuchten Korngröße d im Wesentlichen unabhängig ist: So ist beispielsweise der Einfluss der Haftungseigenschaften F einer Funktionsschicht auf Amplitude A und Phase cp der Wärmewelle nur sehr schwach temperaturabhängig. Variieren die registrierten Amplituden A bzw. Phasen cp sehr stark mit der Temperatur, bedeutet dies im Umkehrschluss, dass sie wahrscheinlich nicht primär von den Haftungseigenschaften F der Funktionsschicht herrühren.

Weiterhin sind auch die Wärmeleiteigenschaften grobkörniger und feinkörniger Gefüge unterschiedlich temperaturabhängig. In einem feinkörnigen Gefüge gibt es sehr viele Korngrenzen, so dass die Wärmeleitung durch die Effekte an Korngrenzen dominiert wird. Diese Effekte sind praktisch temperaturunabhängig. Sollten also die Amplituden A bzw. Phasen cp deutlich temperaturabhängig sein, wäre eine bei der Auswertung getroffene Feststellung, dass das Gefüge feinkörnig ist, mit hoher Wahrscheinlichkeit unrichtig und daher zu verwerfen. In einem grobkörnigen Gefüge gibt es umgekehrt vergleichsweise wenige Korngrenzen, so dass die Wärmeleitung innerhalb des Gefüges dominiert. Diese Wärmeleitung ist stark temperaturabhängig. Eine Temperaturunabhängigkeit der registrierten Amplituden A bzw. Phasen cp passt somit nicht zur Feststellung, dass ein grobkörniges Gefüge vorliegt.

Derartige Widersprüche liegen darin begründet, dass in dem photothermischen Messsignal die jeweils gesuchten Effekte mit anderen Effekten, wie beispielsweise der Oberflächenbeschaffenheit und Randeffekten, überlagert sind. Sie sind vielfach ein Indikator, dass für den konkreten Anwendungsfall die Eindringtiefe der Wärmewelle und damit die Modulationsfrequenz ω der Erwärmung nicht optimal gewählt worden ist. Die Eindringtiefe der Wärmewelle als Funktion der Frequenz ist materialabhängig. Weiterhin ist der Einfluss der Korngrenzen auch von Störeinflüssen aus dem Gefüge selbst, beispielsweise aus dessen kristalliner Fernordnung, überlagert. Sollten diese Störeinflüsse das Messsignal dominieren, zeigt sich dies daran, dass das Phasensignal deutlich stärker temperaturabhängig ist als dies selbst für ein grobes Gefüge zu erwarten wäre. Auch dies ist ein Indikator dafür, dass eine nicht optimale Modulationsfrequenz ω gewählt wurde, denn ob im Material primär das Gefüge, beispielsweise dessen Fernordnung, oder aber die Korngrenzen abgefragt werden, ist ebenfalls frequenzabhängig.

In einer besonders vorteilhaften Ausgestaltung der Erfindung wird die Energiequelle mit mindestens zwei verschiedenen Frequenzen ω₁ und ω₂, und/oder mit einer Überlagerung aus diesen Frequenzen ω₁ und ω₂, moduliert. Für beide Frequenzen ω₁ und ω₂, und/oder für eine Überlagerung aus diesen Frequenzen ω₁ und ω₂, werden jeweils Amplituden A(ω₁), A(ω₂) und/oder A(ω₁±ω₂) bzw. Phasen ϕ(ω₁), ϕ(ω₂) und/oder ϕ(ω₁±ω₂) registriert. Über die Frequenzabhängigkeit der Amplituden A bzw. Phasen ϕ, beispielsweise über die Steigung der Phase cp in Abhängigkeit der Frequenz ω, können ebenfalls verschiedene Beiträge zum photothermischen Messsignal voneinander unterschieden werden. Es wird also vorteilhaft der absolute und/oder relative Unterschied ΔA zwischen den Amplituden A(ω₁), A(ω₂) und/oder A(ω₁±ω₂), und/oder der absolute und/oder relative Unterschied Δϕ zwischen Phasen ϕ(_{ω}),ϕ(ω₂) und/oder ϕ(ω₁±ω₂), in die Auswertung der gesuchten Haftungseigenschaften F bzw. der gesuchten Korngröße d einbezogen. Die Auswertung einer Steigung kann eine bessere Korrelation liefern als die Auswertung eines Absolutwerts. Sind beispielsweise die Messdaten mit einem additiven Offset behaftet, fällt dieser bei der Ermittlung der Steigung heraus.

Anlass zur Entwicklung des Verfahrens war das Bedürfnis nach einer laufenden Qualitätskontrolle bei der Serienfertigung immer gleicher Bauteile. Für diese Anwendung kommt es nicht primär darauf an, Absolutwerte für Haftungseigenschaften F bzw. die Korngröße d zu erhalten. Es kommt vielmehr darauf an, eine gleichbleibende Qualität zu überwachen und sporadische bzw. systematische Abweichungen von einer Spezifikation frühzeitig zu erkennen. Daher wird in einer besonders vorteilhaften Ausgestaltung der Erfindung zunächst mindestens ein Referenzwert A_{R} für die Amplitude A und/oder mindestens ein Referenzwert ϕ_{R} für die Phase ϕ der Wärmewelle an einem Bauteil bestimmt, bei dem die Korngröße d bzw. die Haftungseigenschaften F bekannt sind. Anschließend werden die Korngröße d bzw. die Haftungseigenschaften F für mindestens ein weiteres Bauteil aus dem Vergleich der an diesem Bauteil ermittelten Amplitude A und/oder Phase ϕ mit dem Referenzwert A_{R} bzw. ϕ_{R} ausgewertet. Entsprechen die Amplitude A und/oder die Phase ϕ innerhalb eines vorgegebenen Toleranzintervalls den Referenzwerten A_{R} bzw. ϕ_{R}, kann bei ansonsten gleichen Messbedingungen davon ausgegangen werden, dass das Bauteil die gleiche Korngröße d bzw. die gleichen Haftungseigenschaften F der Funktionsschicht aufweist wie das bei der Ermittlung der Referenzwerte A_{R} bzw. ϕ_{R} verwendete Bauteil. Eine einzige Eichung zu Beginn der Serienfertigung kann also zur Prüfung aller Bauteile der Serie verwendet werden, um neben offensichtlichem Ausschuss auch ein langsames, progressives Abdriften der Bauteileigenschaften von der Spezifikation zu erkennen.

In weiteren besonders vorteilhaften Ausgestaltung der Erfindung wird die Amplitude A und/oder die Phase ϕ unter identischen Bedingungen an einer Vielzahl nominell identisch gefertigter Bauteile bestimmt. Eine absolute oder relative Abweichung der an einem Bauteil i bestimmten Amplitude A(i) und/oder Phase ϕ(i) von einem Mittelwert oder Median über alle Bauteile, die einen vorgegebenen Schwellwert S2 überschreitet, wird als Signal dafür gewertet, dass das Bauteil i hinsichtlich der Korngröße bzw. der Haftungseigenschaften signifikant von den übrigen Bauteilen abweicht. Eine derartige Aussage über einzelne Ausreißer ist auch ohne Eichung zu Beginn der Serienfertigung möglich.

In einer weiteren besonders vorteilhaften Ausgestaltung der Erfindung wird eine Frequenz ω gewählt, bei der der absolute oder relative Unterschied zwischen den an zwei Bauteilen j und k mit bekanntermaßen unterschiedlichen Korngrößen bzw. Haftungseigenschaften ermittelten Amplituden A(j) und A(k) und/oder zwischen den Phasen ϕ(j) und ϕ(k) maximal ist und/oder einen vorgegebenen Schwellwert S3 überschreitet. Auf diese Weise ist gewährleistet, dass sich eine Änderung in der Korngröße bzw. in den Haftungseigenschaften im hinreichenden Maße auf das Messsignal auswirkt. Bei den für die Messung benutzten Effekten handelt es sich grundsätzlich um kleine Effekte, die sich beispielsweise in Phasen von wenigen zehntel Grad bis maximal etwa 2 Grad niederschlagen.

Im Rahmen der Erfindung wurde auch eine Vorrichtung zur Durchführung des erfindungsgemäßen Verfahrens entwickelt. Diese umfasst die in Anspruch 10 genannten Merkmale, zum Beispiel einen Laser zur lokalen Erwärmung des Bauteils, Mittel zur periodischen Modulation der auf das Bauteil eingestrahlten Lichtintensität und mindestens einen frequenzsensitiven Detektor für die vom Bauteil abgestrahlte Infrarotstrahlung.

An Stelle eines Lasers können auch andere lokal auf das Bauteil wirkende Energiequellen verwendet werden, die sich mit der gewünschten Frequenz in ihrer Intensität modulieren lassen. So kann beispielsweise intensives Lampenlicht oder eine andere Strahlungsart genutzt werden. Die Wärme kann aber beispielsweise auch über ein elektrisches Heizelement, dessen Bestromung zeitlich moduliert ist, durch Wärmeleitung in das Bauteil eingekoppelt werden.

Erfindungsgemäß sind Mittel zur Änderung der Basistemperatur des Bauteils von einem ersten Wert T₁auf einen zweiten Wert T₂ vorgesehen dergestalt, dass ausgehend von beiden Basistemperaturen T₁und T₂ jeweils deckungsgleiche Bereiche auf der Bauteiloberfläche lokal erwärmbar sind.

Es wurde erkannt, dass dann bei beiden Temperaturen T₁ und T₂ ausgehend vom erwärmten Bereich identische Bedingungen für die Ausbreitung der Wärmewelle im Bauteil bestehen. Die teilweise nur schwache Temperaturabhängigkeit des Messsignals wird dann nicht von Störeinflüssen überlagert, wie sie beispielsweise durch unterschiedliche Geometrien oder Oberflächenbeschaffenheiten des Bauteils hervorgerufen werden können. Je nach Komplexität der Form des Bauteils ist es besonders vorteilhaft, wenn die lokal erwärmbaren Bereiche auf der Bauteiloberfläche bis auf eine Toleranz von höchstens 100 Mikrometern deckungsgleich sind.

Die Vorrichtung kann beispielsweise ein Peltier-Element und/oder ein Wärme- und/oder Kältebad zur Änderung der Basistemperatur des Bauteils aufweisen. Dabei kann die Basistemperatur des Bauteils beispielsweise über einen angeschlossenen Temperaturfühler, wie etwa ein Thermoelement, überwacht werden.

Ist im Rahmen der Serienfertigung die Taktzeit zwischen zwei aufeinander folgenden Bauteilen hinreichend lang, kann nach der Messung bei der Temperatur T₁ die Temperatur geändert und nach stabilem Erreichen der Temperatur T₂ die zweite Messung durchgeführt werden, ohne dass es hierfür nötig ist, das Bauteil zwischenzeitlich zu bewegen. Es ist dann besonders einfach, ausgehend von beiden Temperaturen T₁ und T₂ deckungsgleiche Bereiche lokal zu erwärmen, indem die Energiequelle bei beiden Temperaturen jeweils in identischer Weise angesteuert wird.

Die Messung kann beschleunigt werden, indem die Messung bei der Temperatur T₂ an einem weiter stromabwärts gelegenen Ort in der Produktionslinie stattfindet. Die Zeit, die das Bauteil im Rahmen des normalen Laufs der Produktionslinie zum Erreichen dieses Orts benötigt, kann für die Änderung der Temperatur von T₁nach T₂ genutzt werden. Die bei beiden Temperaturen T₁ und T₂ jeweils lokal erwärmten Bereiche können beispielsweise zur Deckung gebracht werden, indem der Vorschub der Produktionslinie mit einer hinreichenden Genauigkeit erfolgt und die Bauteile vorteilhaft fest an die Produktionslinie gekoppelt sind. Es können aber auch beispielsweise auf den Bauteilen angebrachte Eichmarken oder ähnlich wirkende Mittel verwendet werden, um den bei der ersten Temperatur T₁ lokal erwärmten Bereich nach der Bewegung zum zweiten Messort und Erreichen der Temperatur T₂ erneut aufzufinden.

In der Regel ist es ausreichend, nur einen Bereich auf der Bauteiloberfläche lokal zu erwärmen. Sollte die Korngröße oder auch die Haftungseigenschaften der Funktionsschicht über das Bauteil inhomogen verteilt sein, kann es vorteilhaft sein, mehrere beabstandete Bereiche auf der Bauteiloberfläche nacheinander lokal zu erwärmen.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Prinzipskizze eines Ausführungsbeispiels des erfindungsgemäßen Verfahrens.
- Figur 2: Ausführungsbeispiel einer erfindungsgemäßen Vorrichtung.
- Figur 3: nachteilige Auswirkungen eines zu grobkörnigen Gefüges auf die Bauteileigenschaften.
- Figur 4: Verlauf der Phase cp in Abhängigkeit der Frequenz ω für die in Figur 2 gezeigten Gefüge.
- Figur 5: Temperaturabhängigkeit des Frequenzgangs der Phase ϕ für die in Figur 2 gezeigten Gefüge.
- Figur 6: Modell für die Auswirkung der Haftungseigenschaften von Funktionsschichten und erwarteter Frequenzgang der gemessenen Phase cp.
- Figur 7: Anwendungsbeispiele für metallische, mit Funktionsschichten vergütete Bauteile.

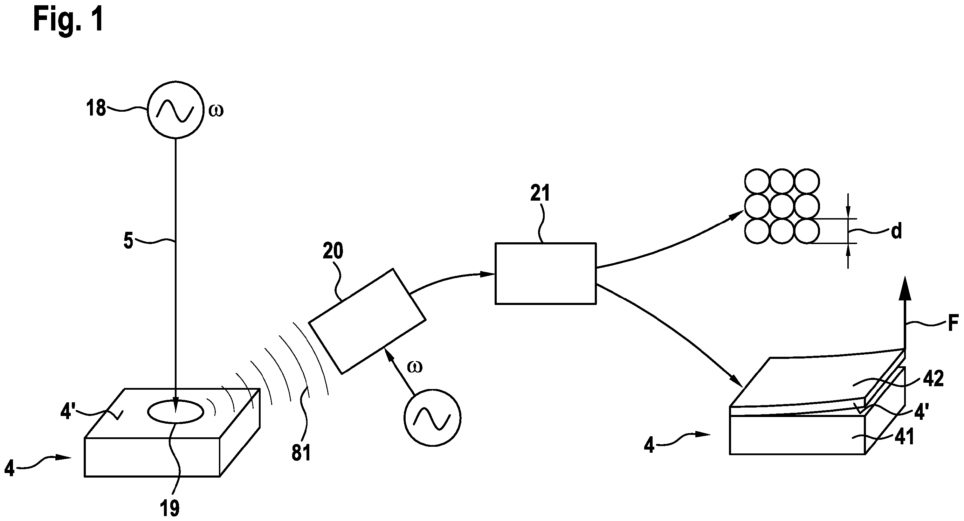

Figur 1 skizziert ein Ausführungsbeispiel des erfindungsgemäßen Verfahrens. Eine Energiequelle 5 wird in Schritt 18 mit einer Frequenz ω periodisch moduliert. Die Energiequelle 5 erwärmt in Schritt 19 die Oberfläche 4' eines Bauteils 4 lokal. Dadurch wird das Bauteil 4 zur Abstrahlung einer Wärmewelle 81 angeregt, die mit der gleichen Frequenz ω moduliert ist. In Schritt 20 werden die Amplitude A und/oder die Phase cp der Wärmewelle 81 frequenzsensitiv gemessen. In Schritt 21 wird aus der Amplitude A und/oder der Phase cp die Korngröße d des Bauteils 4 ausgewertet, und/oder es werden aus der Amplitude A und/oder der Phase ϕ die Haftungseigenschaften F einer auf dem Bauteil 4 aufgebrachten Funktionsschicht 42, ausgewertet. Die Funktionsschicht 42 ist in diesem Ausführungsbeispiel auf der Oberfläche 4' des Bauteils 4 aufgebracht.

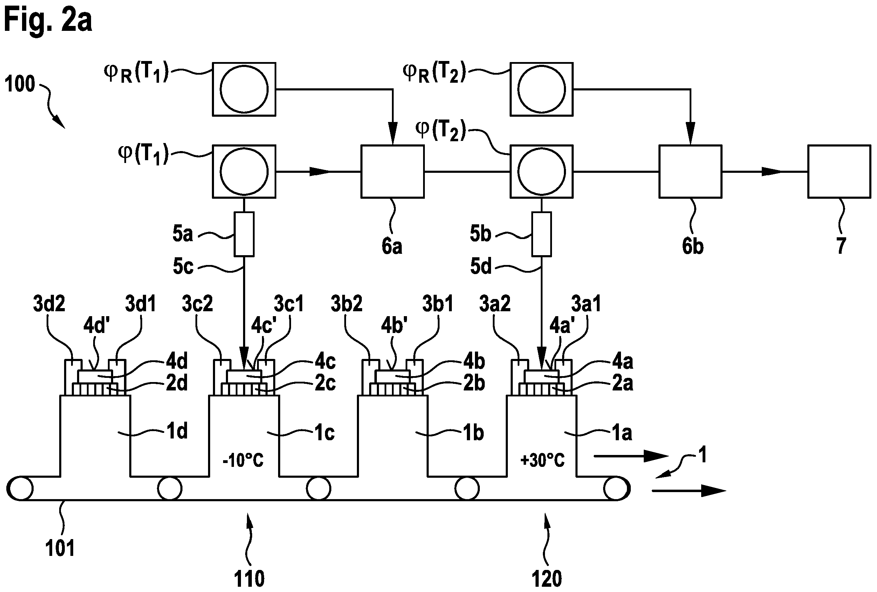

Figur 2a zeigt ein Ausführungsbeispiel der erfindungsgemäßen Vorrichtung 100. Die Produktionslinie 1 enthält ein Förderband 101. Das Förderband 101 fördert im beständigen Takt in Pfeilrichtung Bauteile 4a, 4b, 4c und 4d aus der Fertigung heran. Zu diesem Zweck weist das Förderband 101 Aufnahmen 1a, 1b, 1c und 1d auf, die aus ihm herausgehoben werden können. Auf den Aufnahmen 1a, 1b, 1c und 1d sind jeweils Peltier-Elemente 2a, 2b, 2c und 2d angeordnet. Auf diesen liegen die Bauteile 4a, 4b, 4c und 4d auf. Die Bauteile sind durch Niederhalter 3a1, 3a2, 3b1, 3b2, 3c1, 3c2, 3d1 und 3d2 fest mit dem Peltier-Element verbunden, auf dem sie aufliegen.

Die Vorrichtung 100 weist an einem ersten Messort 110 einen Messkopf 5a auf, der die Bauteile 4a, 4b, 4c und 4d mit einem Laserstrahl 5c jeweils in Schritt 19 des Verfahrens lokal erwärmt und in Schritt 20 des Verfahrens die von den Bauteilen 4a, 4b, 4c und 4d jeweils ausgehende Wärmewelle 81 registriert. Die Peltier-Elemente 2a, 2b, 2c und 2d werden jeweils so eingestellt, dass das Bauteil 4a, 4b, 4c, 4d eine Temperatur von -10°C erreicht, bevor es von dem Laserstrahl 5c lokal erwärmt wird. Die bei der lokalen Erwärmung 19 ausgehend von dieser Basistemperatur T₁ entstehende Wärmewelle 81 ist gegenüber der Anregung mit dem Laserstrahl 5c um eine Phase ϕ(T₁) verschoben. In Schritt 21 des Verfahrens wird in einem ersten Vergleicher 6a die Phase ϕ(T₁) mit einem Referenzwert ϕ_{R}(T₁) verglichen. Steht aufgrund der Abweichung Δϕ zwischen der gemessenen Phase ϕ(T₁) vom Referenzwert ϕ_{R}(T₁) bereits fest, dass das Bauteil 4a, 4b, 4c, 4d fehlerhaft ist, so wird es entsprechend markiert und/oder aus der Produktionslinie 1 entfernt. Anderenfalls wandert das Bauteil 4a, 4b, 4c, 4d in der Förderrichtung des Förderbandes 101 von links nach rechts weiter zum zweiten Messort 120, an dem ein weiterer Messkopf 5b installiert ist. Während dieser Wanderung wird das Peltier-Element 2a, 2b, 2c, 2d von Kühlen auf Heizen umgeschaltet, so dass das Bauteil 4a, 4b, 4c, 4d eine Temperatur T₂ von +30°C erreicht hat, wenn es am zweiten Messort 120 eingetroffen ist. An diesem zweiten Messort 120 wird, wiederum gemäß Schritt 19 des Verfahrens, das Bauteil 4a, 4b, 4c, 4d vom Messkopf 5b durch einen Laserstrahl 5d ausgehend von der neuen Basistemperatur T₂ lokal erwärmt. Es wird in Schritt 20 des Verfahrens die Phase ϕ(T₂) der von Bauteil 4a, 4b, 4c, 4d ausgehenden Wärmewelle 81 gemessen. Die Phase ϕ(T₂) wird in Schritt 21 des Verfahrens durch einen zweiten Vergleicher 6b mit einem Referenzwert ϕ_{R}(T₂) verglichen. Ein Entscheider 7 erhält die von beiden Vergleichern 6a und 6b gelieferten Ergebnisse und wertet diese in ihrer Zusammenschau dahingehend aus, ob das Bauteil 4a, 4b, 4c, 4d die Spezifikation erfüllt und in der Produktionslinie 1 verbleibt oder ob es als fehlerhaft einzustufen ist.

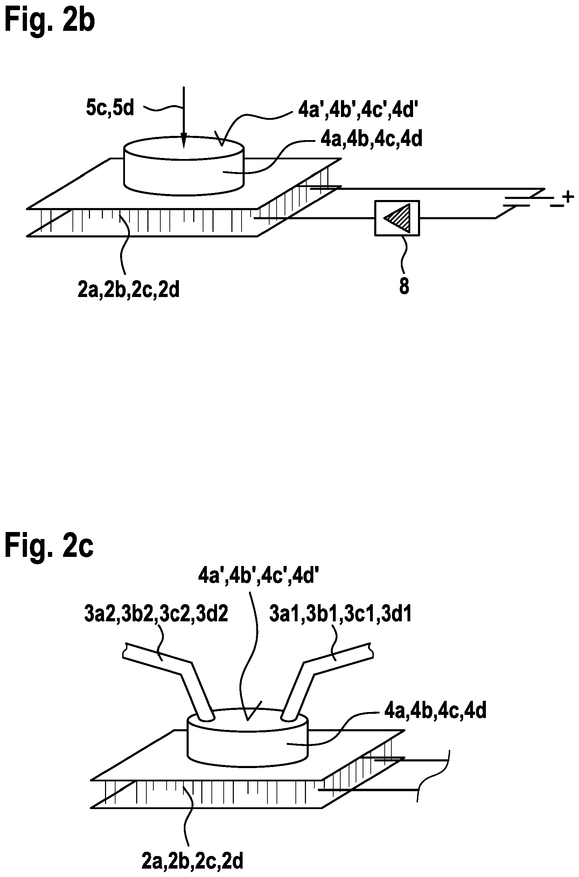

Figur 2b verdeutlicht die Anordnung der Bauteile 4a, 4b, 4c und 4d auf den Peltier-Elementen 2a, 2b, 2c und 2d. Das Peltier- Element kann über eine regelbare Stromquelle 8 mit einem Strom beaufschlagt werden. Dieser Stromfluss führt dem Bauteil 4a, 4b, 4c, 4d entweder Wärme zu oder entzieht ihm Wärme. Mit dem Peltier-Element 2a, 2b, 2c, 2d wird die Basistemperatur T₁, T₂ des Bauteils 4a, 4b, 4c, 4d festgelegt. Ausgehend von dieser Basistemperatur T₁, T₂ wird das Bauteil 4a, 4b, 4c, 4d durch die Laserstrahlen 5c und 5d lokal erwärmt.

Figur 2c verdeutlicht, wie ein stabiler thermischer Kontakt zwischen dem Bauteil 4a, 4b, 4c, 4d und dem Peltier-Element 2a, 2b, 2c, 2d erreicht werden kann. Das Bauteil 4a, 4b, 4c, 4d wird durch die Niederhalter (Andruckstifte) 3a1, 3a2, 3b1, 3b2, 3c1, 3c2, 3d1 und 3d2 gegen das Peltier-Element 2a, 2b, 2c, 2d gedrückt.

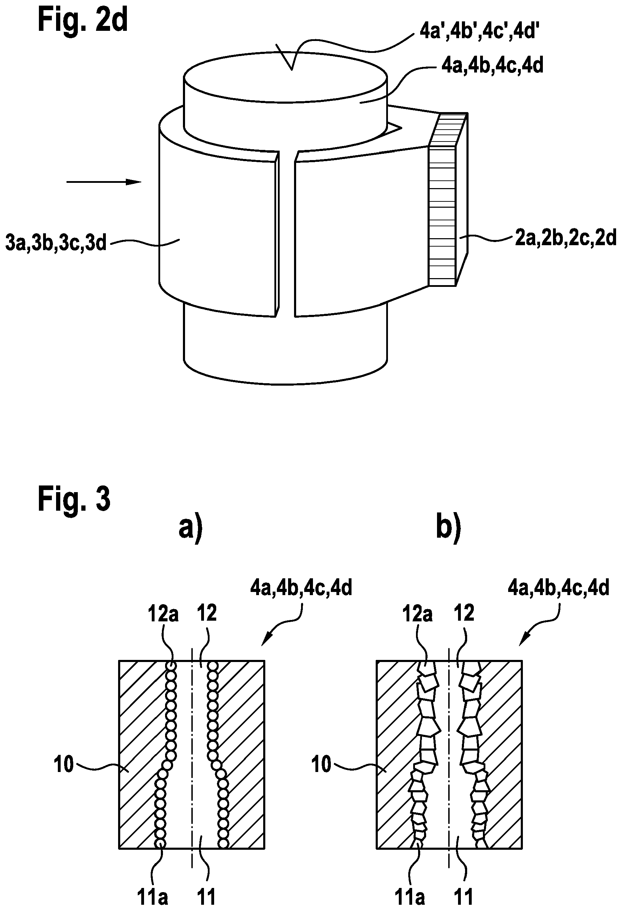

Figur 2d verdeutlicht eine weitere Möglichkeit, eine stabile thermische Ankopplung des Bauteils 4a, 4b, 4c, 4d an das Peltier-Element 2a, 2b, 2c, 2d zu erreichen. Das Peltier-Element 2a, 2b, 2c, 2d ist hier wärmeleitend mit einer ebenfalls wärmeleitenden Klammer 3a, 3b, 3c, 3d verbunden, in die das Bauteil 4a, 4b, 4c, 4d, beispielsweise mit einem Robotergreifer, eingesetzt werden kann. Die massive Klammer 3a, 3b, 3c, 3d wirkt hier als Wärme- bzw. Kältebad. Sie kann beispielsweise aus Kupfer bestehen. Idealerweise wird das Bauteil 4a, 4b, 4c, 4d in geeigneter Form an die Innenseite der Klammer 3a, 3b, 3c, 3d angepresst. Dies kann beispielsweise bewirkt werden, indem die Klammer 3a, 3b, 3c, 3d federnd ausgestaltet ist. Es können zu diesem Zweck aber auch beispielsweise hydraulische Fixierstifte oder Spannbacken vorgesehen sein. Die Klammer 3a, 3b, 3c, 3d sollte nur minimale Temperaturschwankungen aufweisen, um die Interpretation der Ergebnisse nicht zu verfälschen. Eine Überwachung mit einem Temperatursensor ist daher sinnvoll.

Figur 3 verdeutlicht den nachteiligen Einfluss, den ein grobkörniges Gefüge auf Eigenschaften des Bauteils 4a, 4b, 4c, 4d hat. In Figur 3a ist ein Bauteil 4a, 4b, 4c, 4d mit einem feinkörnigen Gefüge dargestellt; in Figur 3b ist ein Bauteil mit einem grobkörnigen Gefüge dargestellt. Das Bauteil 4a, 4b, 4c, 4d ist jeweils ein metallener Grundkörper 10 mit einer weiten Bohrung 11, die einer verjüngten Bohrung 12 fortgesetzt ist. Die Körnerstruktur ist beispielhaft in der Wandung 11a der weiten Bohrung 11 und in der Wandung 12a der verjüngten Bohrung 12 skizziert. Es fällt zunächst auf, dass sich mit einem feinkörnigen Gefüge die gewünschte Form der Bohrung 12 viel exakter nachbilden lässt als mit einem grobkörnigen Gefüge. Das grobkörnige Gefüge weist außerdem viele scharfe Kanten auf, die Ausgangspunkte für Risse sein können. Diese Risse können sich durch den Grundkörper 10 ausbreiten, wodurch das Bauteil 4a, 4b, 4c, 4d letztendlich versagt.

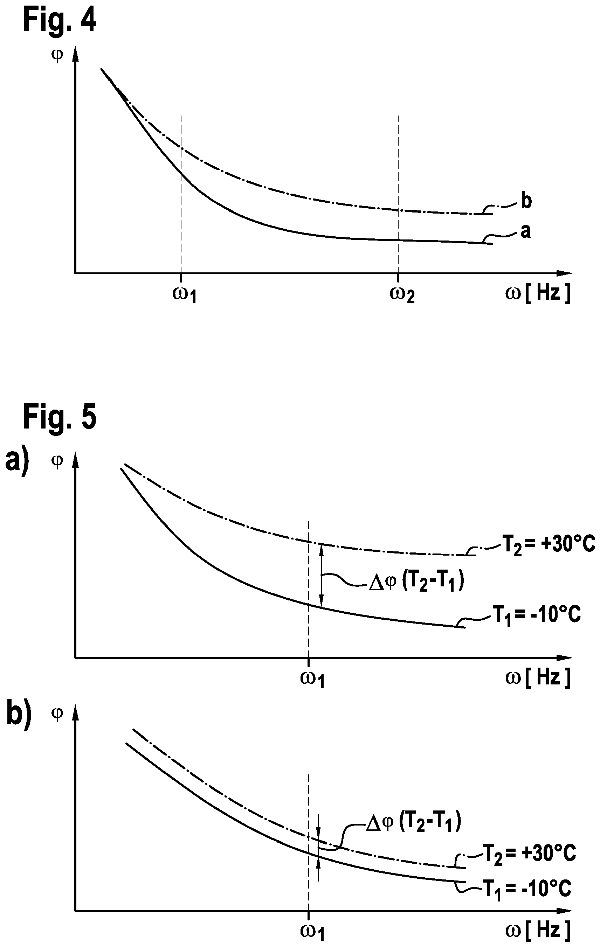

Figur 4 zeigt den Frequenzgang der Phase cp einer Wärmewelle 81, die bei einer periodischen lokalen Erwärmung 19 der in Figur 3 gezeigten Bauteile 4a, 4b, 4c, 4d entsteht. Kurve a zeigt den Frequenzgang für das in Figur 3a gezeigte Bauteil 4a, 4b, 4c, 4d mit einem feinkörnigen Gefüge. Kurve b zeigt den Frequenzgang für das in Figur 3b gezeigte Bauteil 4a, 4b, 4c, 4d mit einem grobkörnigen Gefüge. Durch Messungen bei den beiden eingezeichneten Frequenzen ω₁ und ω₂ in Schritt 20 des Verfahrens und anschließende Auswertung in Schritt 21 des Verfahrens können die beiden Gefüge deutlich voneinander unterschieden werden.

Figur 5 zeigt die Frequenzgänge der Phase cp für die in Figur 3 skizzierten Bauteile 4a, 4b, 4c, 4d, jeweils für eine erste Messtemperatur T₁ von -10°C und für eine zweite Messtemperatur T₂ von +30°C. Figur 5a bezieht sich auf das in Figur 3b gezeigte Bauteil 4a, 4b, 4c, 4d mit dem grobkörnigen Gefüge. Figur 5b bezieht sich auf das in Figur 3a gezeigte Bauteil 4a, 4b, 4c, 4d mit dem feinkörnigen Gefüge. Es ist deutlich zu erkennen, das bei gleicher Anregungsfrequenz ω₁ die durch die Temperaturänderung von T₁ nach T₂ bewirkte Phasenänderung Δϕ(T₂-T₁) für das feinkörnige Gefüge des Bauteils 4a, 4b, 4c,4d gemäß Figur 3a viel geringer ausfällt als für das grobkörnige Gefüge des Bauteils 4a, 4b, 4c, 4d gemäß Figur 3b. Dies liegt darin begründet, dass im feinkörnigen Gefüge die Wärmeleitung aufgrund der Vielzahl der Korngrenzen durch die Korngrenzeneffekte dominiert wird; diese Effekte sind praktisch temperaturunabhängig. In einem grobkörnigen Gefüge fallen diese Effekte weniger ins Gewicht, da es viel weniger Korngrenzen gibt.

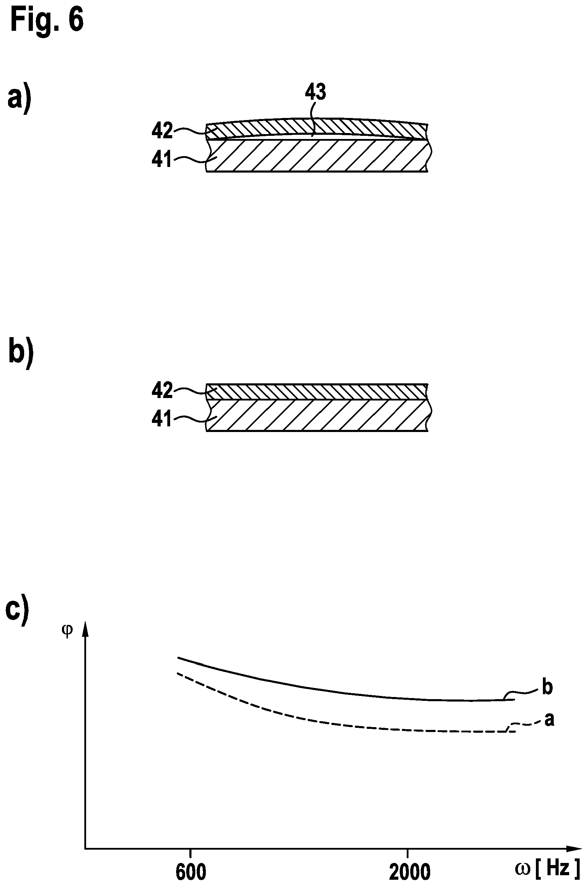

Figur 6 zeigt in vereinfachter Form, wie sich eine schlechte Haftung F einer Funktionsschicht 42 auf einem metallischen Grundwerkstoff 41 von einer guten Haftung F unterscheidet. Figur 6a zeigt eine schlechte Haftung F. Die Funktionsschicht 42 liegt nicht plan auf dem Grundwerkstoff 41 auf, sondern sie liegt gewellt auf. Dabei entsteht zwischen Funktionsschicht 42 und Grundwerkstoff 41 ein Zwischenraum 43, der eine in die Oberfläche der Funktionsschicht 42 lokal eingekoppelte Wärmemenge schlechter ableitet als ein direkter Kontakt der Funktionsschicht 42 mit dem Grundwerkstoff 41.

Figur 6b zeigt eine gute Haftung F der Funktionsschicht 42 auf dem Grundwerkstoff 41. Die Funktionsschicht 42 liegt plan auf, so dass die in die Oberfläche der Funktionsschicht 42 eingekoppelte Wärme unmittelbar durch den angrenzenden Grundwerkstoff 41 abgeführt werden kann.

Figur 6c zeigt, wie sich die Frequenzgänge ϕ(ω) der Phase einer Wärmewelle 81, die durch lokale Erwärmung 19 erzeugt wurde, für die in den Figuren 6a und 6b skizzierten Bauteile 4a, 4b, 4c, 4d voneinander unterscheiden. Kurve a bezieht sich auf das in Figur 6a skizzierte Bauteil 4a, 4b, 4c, 4d. Kurve b bezieht sich auf das in Figur 6b skizzierte Bauteil 4a, 4b, 4c, 4d. Bei schlechter Haftung F der Funktionsschicht 42 ist die Phase cp durchweg geringer als bei guter Haftung F der Funktionsschicht 42, und sie ändert sich deutlich stärker mit der Frequenz ω. Dies liegt darin begründet, dass der schlecht wärmeleitende Zwischenraum 43 die in die Funktionsschicht 42 eingekoppelte Wärme nur mit Zeitverzug an den Grundwerkstoff 41 weitergibt.

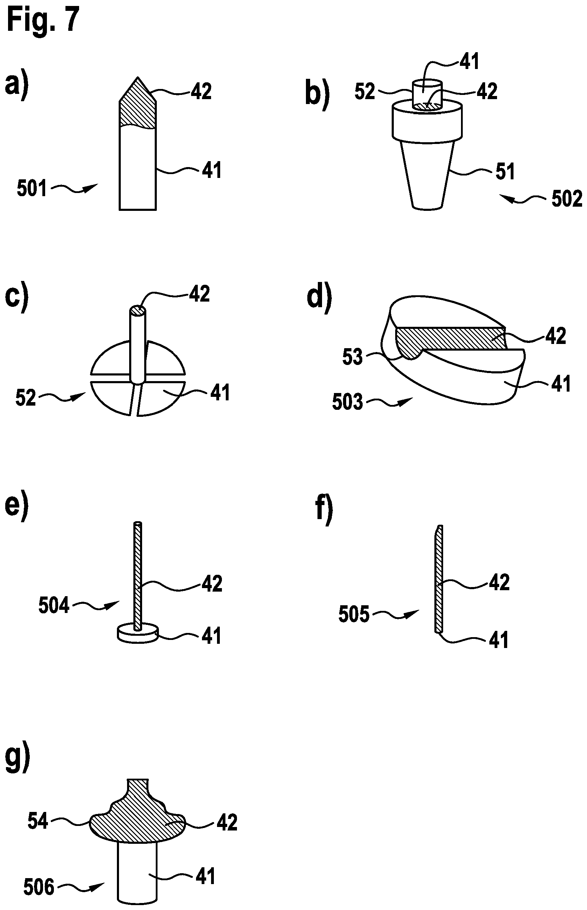

Figur 7 zeigt verschiedene Anwendungsbeispiele für Bauteile, die aus einem Grundwerkstoff 41 mit einer Funktionsschicht 42 aus Kohlenstoff bestehen. Es sind jeweils die am stärksten belasteten Bereiche des metallischen Grundwerkstoffs 41 mit der Funktionsschicht 42 vergütet.

Figur 7a zeigt eine Düsennadel 501. Diese wird in einer Einspritzdüse in einem Injektor verwendet. Durch eine Hubbewegung der Düsennadel 501 wird Kraftstoff durch Einspritzlöcher im Düsenkörper, der das Gegenstück zur Düsennadel 501 bildet und in Figur 7a nicht eingezeichnet ist, in einen Brennraum eines Dieselmotors gespritzt. Die Funktionsschicht 42 aus Kohlenstoff verhindert den vorzeitigen Verschleiß der Düsennadel 501 beim Einschlag in den Düsenkörper.

Figur 7b zeigt ein Ventilstück 502 zum Einsatz in einem Magnet-Injektor, der das zentrale Element zur hydraulischen Steuerung der Düsennadel 501 ist. Das Ventilstück 502 umfasst einen Kolben 51 und einen Anker 52. Der Anker 52 wird durch einen, in Figur 7b nicht eingezeichneten, Magneten bewegt und bestimmt die Bewegung des Kolbens 51. Der Kolben 51 wiederum drückt auf die Düsennadel 501. Die Funktionsschicht 42 aus Kohlenstoff an der Unterseite des Ankers 52 verhindert den vorzeitigen Verschleiß des Ankers 52 beim Einschlag auf dem Kolben 51.

Figur 7c zeigt den Anker 52 im Detail in im Vergleich zu Figur 7b umgekehrter Orientierung. Der Magnet-Injektor mit dem Anker 52 ist ein Stellventil, das durch den (in der Orientierung gemäß Figur 7c) oberhalb des Ankers 52 angeordneten, in Figur 7c nicht eingezeichneten, Magneten betätigt wird. Dabei wird eine Kraftstoffmenge durchgelassen, und der Kraftstoffdruck baut sich teilweise ab. Ist der Magnet nicht bestromt, wird der Anker 52 über eine, in Figur 7c nicht eingezeichnete, Feder zurück in seinen Sitz gedrückt. Das Stellventil ist dann geschlossen, und der Kraftstoffdruck kann sich dahinter erneut aufbauen. Analog zu Figur 7b verhindert die Funktionsschicht 42 aus Kohlenstoff den vorzeitigen Verschleiß des Ankers 52 beim Einschlag auf dem Kolben 51.

Figur 7d zeigt einen Rollenschuh 503 zum Einsatz als Führungselement im Triebwerk einer Diesel-Hochdruckpumpe. Der Rollenschuh 503 führt in der Halbschale 53 eine, in Figur 7d nicht eingezeichnete, metallische Rolle, die auf einer Nocke läuft. Durch die Auf- und Abbewegung der Rolle auf der Nocke wird eine Hubbewegung erzeugt, die für den Druckaufbau genutzt wird. Die Funktionsschicht 42 aus Kohlenstoff auf der Halbschale 53 sorgt dafür, dass die metallische Rolle praktisch verschleißfrei in der Halbschale 53 gleiten kann.

Figur 7e zeigt einen Ventilkolben 504 zum Einsatz im Hochdruckbereich einer Diesel-Hochdruckpumpe. Der Ventilkolben 504 wird durch die Hubbewegung des Rollenschuhs 503 auf und ab bewegt und steuert den Zulauf in den Hochdruckspeicher. Die Funktionsschicht 42 aus Kohlenstoff verhindert den Verschleiß bei diesem Gleitvorgang in der Führung.

Figur 7f zeigt einen Ankerbolzen 505 zum Einsatz in einem Magnet-Injektor. Der Ankerbolzen 505 befindet sich in einer Bohrung des Ankers 52 und wird hierin geführt. Seine Aufgabe ist eine Art Regulierung der Strömung. Die Funktionsschicht 42 aus Kohlenstoff verhindert den Verschleiß des Ankerbolzens 505 beim Gleiten in der Führung.

Figur 7g zeigt einen Ventilbolzen 506 zum Einsatz in einem Piezo-Injektor. Der Ventilbolzen 506 ist Teil des zentralen Ventils zur indirekten Steuerung der Düsennadel 501. Der Ventilbolzen 506 sitzt in einem Ventilstück mit einem Sitz. Schlägt die Dichtstelle 54 des Ventilbolzens 506 in den Sitz ein, ist dieser abgedichtet. Durch Bewegung des Ventilbolzens 506, und somit auch der Dichtstelle 54, wird abwechselnd Druck aufgebaut und abgebaut. Hierdurch wird die Bewegung der Düsennadel 501 gesteuert. Die Funktionsschicht 42 aus Kohlenstoff auf der Dichtstelle 54 verhindert einen vorzeitigen Verschleiß dieser Dichtstelle 54 beim Einschlag in den Ventilsitz.

## Patentansprüche

1. Verfahren (18, 19, 20, 21) zur Qualitätskontrolle eines Bauteils (4, 4a, 4b, 4c, 4d, i, j, k), wobei das Bauteil (4, 4a, 4b, 4c, 4d, i, j, k) durch eine mit mindestens einer Frequenz ω periodisch intensitätsmodulierte (18) Energiequelle (5, 5c, 5d) erwärmt wird (19), und wobei die Amplitude A und/oder die Phase ϕ einer mit der gleichen Frequenz ω modulierten, vom Bauteil (4, 4a, 4b, 4c, 4d, i, j, k) abgestrahlten Wärmewelle (81) registriert wird (20),
**dadurch gekennzeichnet, dass**
abhängig von der gewählten Frequenz ω aus der Amplitude A und/oder aus der Phase cp die Korngröße d des Materials, aus dem das Bauteil (4, 4a, 4b, 4c, 4d, i, j, k) aufgebaut ist, oder die Haftungseigenschaften F einer auf dem Bauteil (4, 4a, 4b, 4c, 4d, i, j, k) aufgebrachten Funktionsschicht (42) ausgewertet werden (21), wobei bei Frequenzen zwischen 25 und 400 Hz die Korngröße d des Materials und bei Frequenzen zwischen 600 und 2000 Hz die Haftungseigenschaften F der Funktionsschicht (42) gemessen werden.

2. Verfahren (18, 19, 20, 21) nach Anspruch 1, **dadurch gekennzeichnet, dass** eine Frequenz ω zwischen 25 und 400 Hz oder zwischen 600 und 2000 Hz gewählt wird.

3. Verfahren (18, 19, 20, 21) nach einem der Ansprüche 1 bis 2, **dadurch gekennzeichnet, dass** die Temperatur des Bauteils (4, 4a, 4b, 4c, 4d, i, j, k) periodisch ausgehend von zwei verschiedenen Basistemperaturen T₁ und T₂ moduliert wird und dass für beide Basistemperaturen T₁ und T₂ jeweils Amplituden A(T₁) und A(T₂) und/oder Phasen ϕ(T₁) und ϕ(T₂) registriert werden (20).

4. Verfahren (18, 19, 20, 21) nach Anspruch 3, **dadurch gekennzeichnet, dass** ein absoluter oder relativer Unterschied ΔA(T₂-T₁) zwischen den Amplituden A(T₁) und A(T₂) und/oder Δϕ(T₂-T₁) zwischen den Phasen ϕ(T₁) und ϕ(T₂), der oberhalb oder unterhalb eines vorgegebenen Schwellwerts S1 liegt, als Signal dafür gewertet wird, dass die Amplitude A bzw. die Phase cp bei der Frequenz ω von den gesuchten Haftungseigenschaften F bzw. von der gesuchten Korngröße d im Wesentlichen unabhängig ist.

5. Verfahren (18, 19, 20, 21) nach einem der Ansprüche 1 bis 4, **dadurch gekennzeichnet, dass** die Energiequelle (5c, 5d) mit mindestens zwei verschiedenen Frequenzen ω₁ und ω₂, und/oder mit einer Überlagerung aus diesen Frequenzen ω₁ und ω₂, moduliert wird und dass für beide Frequenzen ω₁ und ω₂, und/oder für eine Überlagerung aus diesen Frequenzen ω₁ und ω₂, jeweils Amplituden A(ω₁), A(ω₂) und/oder A(ω₁±ω₂) bzw. Phasen ϕ(ω₁), ϕ(ω₂) und/oder ϕ(ω₁±ω₂) registriert werden (20).

6. Verfahren (18, 19, 20, 21) nach Anspruch 5, **dadurch gekennzeichnet, dass** der absolute und/oder relative Unterschied ΔA zwischen den Amplituden A(ω₁), A(ω₂) und/oder A(ω₁±ω₂), und/oder der absolute und/oder relative Unterschied Δϕ zwischen Phasen ϕ(ω₁), ϕ(ω₂) und/oder ϕ(ω₁±ω₂), in die Auswertung (21) der gesuchten Haftungseigenschaften F bzw. der gesuchten Korngröße d einbezogen wird.

7. Verfahren (18, 19, 20, 21) nach einem der Ansprüche 1 bis 6, **dadurch gekennzeichnet, dass** zunächst mindestens ein Referenzwert A_{R} für die Amplitude A und/oder mindestens ein Referenzwert ϕ_{R} für die Phase cp der Wärmewelle (81) an einem Bauteil (4, 4a, 4b, 4c, 4d, i, j, k) bestimmt wird (20), bei dem die Korngröße d bzw. die Haftungseigenschaften F bekannt sind, und dass anschließend die Korngröße d bzw. die Haftungseigenschaften F für mindestens ein weiteres Bauteil (4, 4a, 4b, 4c, 4d, i, j, k) aus dem Vergleich der an diesem Bauteil (4, 4a, 4b, 4c, 4d, i, j, k) ermittelten Amplitude A und/oder Phase cp mit dem Referenzwert A_{R} bzw. ϕ_{R} ausgewertet werden (21).

8. Verfahren (18, 19, 20, 21) nach einem der Ansprüche 1 bis 7, **dadurch gekennzeichnet, dass** die Amplitude A und/oder die Phase cp unter identischen Bedingungen an einer Vielzahl nominell identisch gefertigter Bauteile (4a, 4b, 4c, 4d, i, j, k) bestimmt wird (20) und eine absolute oder relative Abweichung ΔA der an einem Bauteil (i) bestimmten Amplitude A(i), und/oder eine absolute oder relative Abweichung Δϕ der Phase ϕ(i), von einem Mittelwert oder Median über alle Bauteile (4a, 4b, 4c, 4d, i, j, k), die einen vorgegebenen Schwellwert S2 überschreitet, als Signal dafür gewertet wird (21), dass das Bauteil i hinsichtlich der Korngröße d bzw. der Haftungseigenschaften F signifikant von den übrigen Bauteilen (4a, 4b, 4c, 4d, i, j, k) abweicht.

9. Verfahren (18, 19, 20, 21) nach einem der Ansprüche 1 bis 8, **dadurch gekennzeichnet, dass** eine Frequenz ω gewählt wird, bei der der absolute oder relative Unterschied zwischen den an zwei Bauteilen (j) und (k) mit bekanntermaßen unterschiedlichen Korngrößen bzw. Haftungseigenschaften ermittelten Amplituden A(j) und A(k) (ΔA) und/oder zwischen den Phasen ϕ(j) und ϕ(k) (Δϕ) maximal ist und/oder einen vorgegebenen Schwellwert S3 überschreitet.

10. Vorrichtung (100) zur Durchführung des Verfahrens nach einem der Ansprüche 1 bis 9, umfassend mindestens eine Energiequelle (5, 5c, 5d) zur lokalen Erwärmung des Bauteils (4, 4a, 4b, 4c 4d, i, j, k), Mittel zur periodischen Modulation (18) der auf das Bauteil (4, 4a, 4b, 4c, 4d, i, j, k) eingestrahlten Lichtintensität mit mindestens einer Frequenz ω und mindestens einen frequenzsensitiven Detektor (5a, 5b) für die vom Bauteil (4, 4a, 4b, 4c, 4d, i, j, k) abgestrahlte Infrarotstrahlung, wobei die Amplitude A und/oder die Phase cp einer mit der gleichen Frequenz ω modulierten, vom Bauteil (4, 4a, 4b, 4c, 4d, i, j, k) abgestrahlten Wärmewelle (81) registriert wird, **dadurch gekennzeichnet, dass** Mittel zur Auswertung (21) vorgesehen sind, die abhängig von der gewählten Frequenz ω aus der Amplitude A und/oder aus der Phase cp die Korngröße d des Materials, aus dem das Bauteil (4, 4a, 4b, 4c, 4d, i, j, k) aufgebaut ist, oder die Haftungseigenschaften F einer auf dem Bauteil (4, 4a, 4b, 4c, 4d, i, j, k) aufgebrachten Funktionsschicht (42) auswerten, wobei bei Frequenzen ω zwischen 25 und 400 Hz die Korngröße d des Materials und bei Frequenzen zwischen 600 und 2000 Hz die Haftungseigenschaften F der Funktionsschicht (42) gemessen werden, und dass Mittel zur Änderung der Basistemperatur des Bauteils (4, 4a, 4b, 4c 4d, i, j, k) von einem ersten Wert T₁ auf einen zweiten Wert T₂ vorgesehen sind dergestalt, dass ausgehend von beiden Basistemperaturen T₁ und T₂ jeweils deckungsgleiche Bereiche auf der Oberfläche (4', 4a', 4b', 4c', 4d', i', j', k') des Bauteils (4, 4a, 4b, 4c, 4d, i, j, k) lokal erwärmbar (19) sind.

11. Vorrichtung nach Anspruch 10, **dadurch gekennzeichnet, dass** ein Peltier-Element (2a, 2b, 2c, 2d) und/oder ein Wärme- und/oder Kältebad (3a, 3b, 3c, 3d) als Mittel zur Änderung der Basistemperatur des Bauteils (4, 4a, 4b, 4c, 4d, i, j, k) vorgesehen ist.

## Claims

1. Method (18, 19, 20, 21) for the quality control of a component (4, 4a, 4b, 4c, 4d, i, j, k), wherein the component (4, 4a, 4b, 4c, 4d, i, j, k) is heated (19) by an energy source (5, 5c, 5d) which is intensity-modulated (18) periodically with at least one frequency ω, and wherein the amplitude A and/or the phase ϕ of a heat wave (81) emitted by the component (4, 4a, 4b, 4c, 4d, i, j, k) and modulated with the same frequency ω is registered (20),
**characterized in that,**
depending on the selected frequency ω, the grain size d of the material of which the component (4, 4a, 4b, 4c, 4d, i, j, k) is made or the adhesion properties F of a functional layer (42) applied on the component (4, 4a, 4b, 4c, 4d, i, j, k) are evaluated (21) from the amplitude A and/or the phase ϕ, wherein the grain size d of the material is measured at frequencies of between 25 and 400 Hz and the adhesion properties F of the functional layer (42) are measured at frequencies of between 600 and 2000 Hz.

2. Method (18, 19, 20, 21) according to Claim 1, **characterized in that** a frequency ω of between 25 and 400 Hz or between 600 and 2000 Hz is selected.

3. Method (18, 19, 20, 21) according to one of Claims 1 and 2, **characterized in that** the temperature of the component (4, 4a, 4b, 4c, 4d, i, j, k) is modulated periodically on the basis of two different basic temperatures T₁ and T₂, and **in that** amplitudes A(T₁) and A(T₂) and/or phases ϕ(T₁) and ϕ(T₂) are registered (20) for the two basic temperatures T₁ and T₂.

4. Method (18, 19, 20, 21) according to Claim 3, **characterized in that** an absolute or relative difference ΔA(T₂-T₁) between the amplitudes A(T₁) and A(T₂) and/or Δϕ(T₂-T₁) between the phases ϕ(T₁) and ϕ(T₂), which lies above or below a predetermined threshold S1, is evaluated as an indication that the amplitude A or the phase ϕ at the frequency ω is essentially independent of the sought adhesion properties F or the sought grain size d.

5. Method (18, 19, 20, 21) according to one of Claims 1 to 4, **characterized in that** the energy source (5c, 5d) is modulated with at least two different frequencies ω₁ and ω₂ and/or with a superposition of these frequencies ω₁ and ω₂, and **in that** amplitudes A(ω₁), A(ω₂) and/or A(ω₁+ω₂) and/or phases ϕ(ω₁), ϕ(ω₂) and/or ϕ(ω₁+ω₂) are respectively registered (20) for the two frequencies ω₁ and ω₂ and/or for a superposition of these frequencies ω₁ and ω₂.

6. Method (18, 19, 20, 21) according to Claim 5, **characterized in that** the absolute and/or relative difference ΔA between the amplitudes A(ω₁), A(ω₂) and/or A(ω₁+ω₂) and/or the absolute and/or relative difference Δϕ between phases ϕ(ω₁), ϕ(ω₂) and/or ϕ(ω₁+ω₂) are incorporated into the evaluation (21) of the sought adhesion properties F or the sought grain size d.

7. Method (18, 19, 20, 21) according to one of Claims 1 to 6, **characterized in that** at least one reference value A_{R} for the amplitude A and/or at least one reference value ϕ_{R} for the phase ϕ of the heat wave (81) is initially determined (20) on a component (4, 4a, 4b, 4c, 4d, i, j, k) for which the grain size d and/or the adhesion properties F are known, and **in that** the grain size d and/or the adhesion properties F are subsequently evaluated (21) for at least one further component (4, 4a, 4b, 4c, 4d, i, j, k) from the comparison of the amplitude A and/or phase ϕ determined on this component (4, 4a, 4b, 4c, 4d, i, j, k) with the reference value A_{R} and/or ϕ_{R}.

8. Method (18, 19, 20, 21) according to one of Claims 1 to 7, **characterized in that** the amplitude A and/or the phase ϕ is determined (20) under identical conditions on a multiplicity of nominally identically manufactured components (4a, 4b, 4c, 4d, i, j, k), and an absolute or relative deviation ΔA of the amplitude A(i) determined on one component (i) and/or an absolute or relative deviation Δϕ of the phase ϕ(i) from a mean value or median over all the components (4a, 4b, 4c, 4d, i, j, k) which exceeds a predetermined threshold value S2 is evaluated (21) as an indication that the component i deviates significantly from the other components (4a, 4b, 4c, 4d, i, j, k) in respect of the grain size d and/or the adhesion properties F.

9. Method (18, 19, 20, 21) according to one of Claims 1 to 8, **characterized in that** a frequency ω at which the absolute or relative difference between the amplitudes A(j) and A(k) (ΔA) and/or between the phases ϕ(j) and ϕ(k) (Δϕ) determined on two components (j) and (k) which are known to have different grain sizes and/or adhesion properties is maximal and/or exceeds a predetermined threshold value S3 is selected.

10. Apparatus (100) for carrying out the method according to one of Claims 1 to 9, comprising at least one energy source (5, 5c, 5d) for local heating of the component (4, 4a, 4b, 4c, 4d, i, j, k), means for periodic modulation (18) of the light intensity shone onto the component (4, 4a, 4b, 4c, 4d, i, j, k) with at least one frequency ω, and at least one frequency-sensitive detector (5a, 5b) for the infrared radiation emitted by the component (4, 4a, 4b, 4c, 4d, i, j, k), wherein the amplitude A and/or the phase ϕ of a heat wave (81) emitted by the component (4, 4a, 4b, 4c, 4d, i, j, k) and modulated with the same frequency ω is registered, **characterized in that** means for evaluation (21), which, depending on the selected frequency ω, evaluate the grain size d of the material of which the component (4, 4a, 4b, 4c, 4d, i, j, k) is made or the adhesion properties F of a functional layer (42) applied on the component (4, 4a, 4b, 4c, 4d, i, j, k) from the amplitude A and/or the phase ϕ, are provided, wherein the grain size d of the material is measured at frequencies ω of between 25 and 400 Hz and the adhesion properties F of the functional layer (42) are measured at frequencies of between 600 and 2000 Hz, and **in that** means for modifying the basic temperature of the component (4, 4a, 4b, 4c, 4d, i, j, k) from a first value T₁ to a second value T₂ are provided, in such a way that congruent regions on the surface (4', 4a', 4b', 4c', 4d', i', j', k') of the component (4, 4a, 4b, 4c, 4d, i, j, k) can respectively be heated locally (19) on the basis of the two basic temperatures T₁ and T₂.

11. Apparatus according to Claim 10, **characterized in that** a Peltier element (2a, 2b, 2c, 2d) and/or a hot and/or cold bath (3a, 3b, 3c, 3d) is provided as means for modifying the basic temperature of the component (4, 4a, 4b, 4c, 4d, i, j, k).

## Revendications

1. Procédé (18, 19, 20, 21) pour le contrôle qualité d'un composant (4, 4a, 4b, 4c, 4d, i, j, k), le composant (4, 4a, 4b, 4c, 4d, i, j, k) étant chauffé (19) par une source d'énergie (5, 5c, 5d) périodiquement modulée en intensité (18) avec au moins une fréquence ω, et l'amplitude A et/ou la phase ϕ d'une onde thermique (81) émise par le composant (4, 4a, 4b, 4c, 4d, i, j, k), modulée avec la même fréquence ω, étant enregistrées (20),
**caractérisé en ce que**
en fonction de la fréquence ω choisie, à partir de l'amplitude A et/ou à partir de la phase ϕ, la taille de grain d du matériau, à partir duquel le composant (4, 4a, 4b, 4c, 4d, i, j, k) est formé, ou les propriétés d'adhérence F d'une couche fonctionnelle (42) appliquée sur le composant (4, 4a, 4b, 4c, 4d, i, j, k) sont évaluées (21), la taille de grain d du matériau étant mesurée à des fréquences comprises entre 25 et 400 Hz et les propriétés d'adhérence F de la couche fonctionnelle (42) étant mesurées à des fréquences comprises entre 600 et 2 000 Hz.

2. Procédé (18, 19, 20, 21) selon la revendication 1, **caractérisé en ce qu'**une fréquence ω comprise entre 25 et 400 Hz ou entre 600 et 2 000 Hz est choisie.

3. Procédé (18, 19, 20, 21) selon l'une quelconque des revendications 1 à 2, **caractérisé en ce que** la température du composant (4, 4a, 4b, 4c, 4d, i, j, k) est modulée périodiquement en partant de deux températures de base différentes T₁ et T₂, et **en ce que** des amplitudes A(T₁) et A(T₂) et/ou des phases ϕ(T₁) et ϕ(T₂) sont enregistrées respectivement (20) pour les deux températures de base T₁ et T₂.

4. Procédé (18, 19, 20, 21) selon la revendication 3, **caractérisé en ce qu'**une différence absolue ou relative ΔA(T₂-T₁) entre les amplitudes A(T₁) et A(T₂) et/ou Δϕ (T₂-T₁) entre les phases ϕ(T₁) et ϕ(T₂), qui est située au-dessus ou en dessous d'une valeur seuil prédéterminée S1, est évaluée en tant que signal indiquant que l'amplitude A ou la phase ϕ à la fréquence ω est essentiellement indépendante des propriétés d'adhérence F recherchées ou de la taille de grain d recherchée.

5. Procédé (18, 19, 20, 21) selon l'une quelconque des revendications 1 à 4, **caractérisé en ce que** la source d'énergie (5c, 5d) est modulée avec au moins deux fréquences différentes ω₁ et ω₂, et/ou avec une superposition de ces fréquences ω₁ et ω₂, et **en ce que** pour les deux fréquences ω₁ et ω₂, et/ou pour une superposition de ces fréquences ω₁ et ω₂, des amplitudes A(ω₁), A(ω₂) et/ou A(ω₁+ω₂) ou des phases ϕ(ω₁), ϕ(ω₂) et/ou ϕ(ω₁+ω₂) sont respectivement enregistrées (20).

6. Procédé (18, 19, 20, 21) selon la revendication 5, **caractérisé en ce que** la différence absolue et/ou relative ΔA entre les amplitudes A(ω₁), A(ω₂) et/ou A(ω₁+ω₂), et/ou la différence absolue et/ou relative Δϕ entre les phases ϕ(ω₁), ϕ(ω₂) et/ou ϕ(ω₁+ω₂), est incluse dans l'évaluation (21) des propriétés d'adhérence F recherchées ou de la taille de grain d recherchée.

7. Procédé (18, 19, 20, 21) selon l'une quelconque des revendications 1 à 6, **caractérisé en ce que** tout d'abord au moins une valeur de référence A_{R} pour l'amplitude A et/ou au moins une valeur de référence ϕ_{R} pour la phase ϕ de l'onde thermique (81) est déterminée (20) sur un composant (4, 4a, 4b, 4c, 4d, i, j, k), à laquelle la taille de grain d ou les propriétés d'adhérence F sont connues, et **en ce qu'**ensuite la taille de grain d ou les propriétés d'adhérence F pour au moins un composant supplémentaire (4, 4a, 4b, 4c, 4d, i, j, k) sont évaluées (21) à partir de la comparaison de l'amplitude A et/ou de la phase ϕ déterminées sur ce composant (4, 4a, 4b, 4c, 4d, i, j, k) avec la valeur de référence A_{R} ou ϕp.

8. Procédé (18, 19, 20, 21) selon l'une quelconque des revendications 1 à 7, **caractérisé en ce que** l'amplitude A et/ou la phase ϕ sont déterminées (20) dans des conditions identiques sur une pluralité de composants (4a, 4b, 4c, 4d, i, j, k) fabriqués de manière nominalement identique, et une déviation absolue ou relative ΔA de l'amplitude A(i) déterminée sur un composant (i), et/ou une déviation absolue ou relative Δϕ de la phase ϕ(i), d'une valeur moyenne ou d'une médiane sur tous les composants (4a, 4b, 4c, 4d, i, j, k), qui dépasse une valeur seuil prédéterminée S2, est évaluée (21) en tant que signal indiquant que le composant i dévie significativement des autres composants (4a, 4b, 4c, 4d, i, j, k) au regard de la taille de grain d ou des propriétés d'adhérence F.

9. Procédé (18, 19, 20, 21) selon l'une quelconque des revendications 1 à 8, **caractérisé en ce qu'**une fréquence ω est choisie, à laquelle la différence absolue ou relative entre les amplitudes A(j) et A(k) (ΔA) et/ou entre les phases ϕ(j) et ϕ(k) (Δϕ) déterminées sur deux composants (j) et (k) ayant des tailles de grain ou des propriétés d'adhérence différentes connues est maximale et/ou dépasse une valeur seuil prédéterminée S3.

10. Dispositif (100) pour la réalisation du procédé selon l'une quelconque des revendications 1 à 9, comprenant au moins une source d'énergie (5, 5c, 5d) pour le chauffage local du composant (4, 4a, 4b, 4c, 4d, i, j, k), des moyens pour la modulation périodique (18) de l'intensité de lumière rayonnée sur le composant (4, 4a, 4b, 4c, 4d, i, j, k) avec au moins une fréquence ω et au moins un détecteur sensible à la fréquence (5a, 5b) pour le rayonnement infrarouge émis par le composant (4, 4a, 4b, 4c, 4d, i, j, k), l'amplitude A et/ou la phase ϕ d'une onde thermique (81) émise par le composant (4, 4a, 4b, 4c, 4d, i, j, k), modulée avec la même fréquence ω, étant enregistrées, **caractérisé en ce que** des moyens pour l'évaluation (21) sont prévus, qui évaluent en fonction de la fréquence ω choisie, à partir de l'amplitude A et/ou à partir de la phase ϕ, la taille de grain d du matériau, à partir duquel le composant (4, 4a, 4b, 4c, 4d, i, j, k) est formé, ou les propriétés d'adhérence F d'une couche fonctionnelle (42) appliquée sur le composant (4, 4a, 4b, 4c, 4d, i, j, k), la taille de grain d du matériau étant mesurée à des fréquences ω comprises entre 25 et 400 Hz et les propriétés d'adhérence F de la couche fonctionnelle (42) étant mesurées à des fréquences comprises entre 600 et 2 000 Hz, et **en ce que** des moyens pour la modification de la température de base du composant (4, 4a, 4b, 4c, 4d, i, j, k) d'une première valeur T₁ à une deuxième valeur T₂ sont prévus, de telle sorte qu'en partant des deux températures de base T₁ et T₂, des zones coïncidentes puissent respectivement être chauffées localement (19) sur la surface (4', 4a', 4b', 4c', 4d', i', j', k') du composant (4, 4a, 4b, 4c, 4d, i, j, k).

11. Dispositif selon la revendication 10, **caractérisé en ce qu'**un élément de Peltier (2a, 2b, 2c, 2d) et/ou un bain chaud et/ou froid (3a, 3b, 3c, 3d) est prévu en tant que moyen pour la modification de la température de base du composant (4, 4a, 4b, 4c, 4d, i, j, k).
